# EUROPEAN PATENT APPLICATION

(11) **EP 4 717 485 A1**
(43) Date of publication of application: **01.04.2026**
(21) Application number: 25204906.9
(22) Date of filing: 26.09.2025
(51) Int. Cl.: B60J 7/10, B60J 7/20

(54) **CONVERTIBLE MOTOR VEHICLE WITH RETRACTABLE HARDTOP AND METHOD FOR THE RECONFIGURATION OF A MOTOR VEHICLE WITH RETRACTABLE HARDTOP**

(30) Priority: 27.09.2024 IT 202400021516
(71) Applicant: FERRARI S.p.A., 41100 Modena (IT)
(72) Inventor: CALTAGIRONE, Alessandro, 41100 MODENA (IT); MORSELLI, Marco, 41100 MODENA (IT)
(74) Representative: Studio Torta S.p.A.

(57) **Abstract**

A convertible motor vehicle (1) is described, comprising a body (2); a passenger compartment (4); a front and a rear (5, 6) with a load compartment (7); and a retractable hardtop (3); the motor vehicle (1) is capable of being selectively switched to a first configuration in which the hardtop (3) is partly arranged so as to cover the passenger compartment (4); and a second configuration in which the hardtop (3) is partly housed within the load compartment (7); the hardtop (3) comprises: a first panel (10) arranged so as to cover, at the top, a first portion (21) of the passenger compartment (4) in the first configuration of the motor vehicle (1) and housed in the load compartment (7) in the second configuration of the motor vehicle (1); and a second panel (11) arranged so as to cover, at the top, a second portion (22) of the passenger compartment (4) both in the first configuration and in the second configuration of the motor vehicle (1); the first panel (10) is located in front of the second panel (11) and comprises a third portion (31) and a pair of fourth portions (32) opposite one another along the second axis (Y); the third portion (31) is interposed between the fourth portions (32) along the second axis (Y).

## Description

### CROSS-REFERENCE TO RELATED APPLICATIONS

This patent application claims priority from Italian patent application no. 102024000021516 filed on September 27, 2024, the entire disclosure of which is incorporated herein by reference.

### TECHNICAL FIELD

The present invention relates to a convertible motor vehicle with a retractable hardtop and a relative reconfiguration method.

### BACKGROUND

Convertible motor vehicles are known, i.e. essentially comprising:
- a body defining a passenger compartment intended to house a driver and any passengers, a front and a rear located at the front and at the back, respectively, relative to the passenger compartment; and
- a retractable hardtop.

The convertible motor vehicle also has a longitudinal axis parallel to a normal travel direction of the motor vehicle, and a transverse axis horizontal and orthogonal to the longitudinal axis.

The convertible motor vehicle may selectively assume:
- a first "cabriolet" configuration, in which the hardtop is extended and arranged so as to cover the passenger compartment; and
- a second "coupé" configuration, in which the passenger compartment is open at the top.

In greater detail, the rear of the motor vehicle defines a load compartment and comprises a hatch which is capable of being selectively switched to an open position in which it allows access to the load compartment and a closed position in which it obstructs access to the load compartment.

The motor vehicle also comprises a kinematic selectively operable from inside the motor vehicle during the travel of the same so as to determine the shift from the first configuration to the second configuration and vice versa.

More precisely, to determine this shift, the actuation of the kinematics cause the switch of the hatch from the closed position to the open position, the folding and subsequent movement of the folded hardtop within the load compartment, and the switch of the hatch from the open position to the closed position.

In order to accommodate the folded retractable hardtop into the load compartment, the motor vehicles of known type have non-negligible encumbrances in the rear parallel to the transverse axis of the motor vehicle.

These encumbrances, on the one hand, determine inevitable constraints that penalize aerodynamic performance.

In fact, these encumbrances inevitably penalise the overall aerodynamic drag coefficient of the motor vehicle, increasing the overall consumption thereof with the same performance.

This penalization is even more severe in the case of performance convertible motor vehicles with electric propulsion. In fact, the still contained levels of electrical energy density stored in the electric batteries of today's conception result in a limited autonomy, which can be increased in part by reducing the overall aerodynamic drag of the motor vehicle.

These encumbrances also limit the designer's freedom in conceiving the overall shape of the motor vehicle and the consequent stylistic appearance.

A need is felt in the sector for a convertible motor vehicle with the lowest possible overall aerodynamic drag.

There is also a felt need for maximum freedom in the design of the rear portion, so as to be able to create the motor vehicle with the desired style.

### SUMMARY

Aim of the present invention is to realise a convertible motor vehicle with a retractable hardtop, which allows to satisfy at least one of the needs mentioned above.

The aforesaid aim is achieved by the present invention, as it relates to a convertible motor vehicle with a hardtop, as defined by claim 1.

The present invention also relates to a method for the reconfiguration of a convertible motor vehicle with a hardtop, as defined by claim 8.

### BRIEF DESCRIPTION OF THE DRAWINGS

For a better understanding of the present invention, a preferred embodiment is described below, by way of nonlimiting example and with reference to the accompanying drawings, wherein:
- Figure 1 is a perspective view of a convertible motor vehicle with a retractable hardtop realized according to the present invention, with parts removed for clarity and in a first coupé configuration;
- Figure 2 is a side view of the motor vehicle of Figure 1, with parts removed for clarity;
- Figure 3 is a top view of the retractable hardtop of the motor vehicle of Figures 1 and 2;
- Figure 4 is a side view of the motor vehicle of Figures 1 and 2 during a first step of shift from the "coupé" configuration to the "cabriolet" configuration;
- Figure 5 is a top view of the retractable hardtop of the motor vehicle of Figures 1 and 2 during the first shift step of Figure 4;
- Figure 6 is a side view of the motor vehicle of Figures 1 to 5 during a second step of shift from a "cabriolet" configuration to a "coupé" configuration; and
- Figure 7 is a perspective view of the motor vehicle of Figures 1 to 6, with parts removed for clarity in the second "cabriolet" configuration.

### DESCRIPTION OF EMBODIMENTS

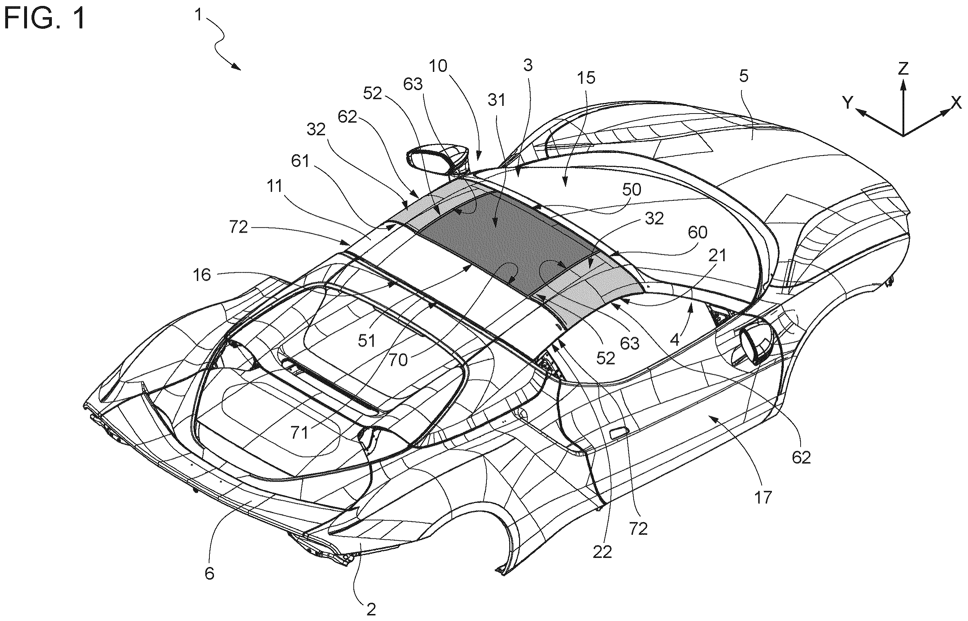

With reference to Figures 1 to 7, 1 denotes a motor vehicle comprising a body 2 and a rigid retractable hardtop 3 commonly known as a "retractable hard-top roof".

It is also possible to define:
- a longitudinal axis X integral with the motor vehicle 1, arranged, in use, horizontal and parallel to a normal travel direction of the motor vehicle 1;
- a transverse axis Y integral with the motor vehicle 1, arranged, in use, horizontal and orthogonal to the axis X; and
- an axis Z integral with the motor vehicle 1 arranged, in use, vertical and orthogonal to the axes X, Y.

It should be specified that in the remainder of the present description, expressions such as "above", "below", "front", "rear" and the like are used with reference to conditions of normal travel of the motor vehicle 1.

It should also be specified that in the remainder of the present description the expression "main extension" of an edge along an axis is used to indicate that the edge can also be slightly curved but has a length parallel to the aforesaid axis.

The body 2 essentially comprises:
- a passenger compartment 4 intended to be occupied by a driver and any passengers; and
- a front 5 and a rear 6 located at the front and at the back, respectively, of the passenger compartment 4.

In more detail, the body 2 comprises, in turn:
- a windscreen 15 delimiting, at the front, the passenger compartment 4;
- a backrest 16 opposite the windscreen 15 and delimiting, at the back, the passenger compartment 4; and
- a pair of doors 17 movable between a closed position in which they laterally delimit the passenger compartment 4 and extend between the windscreen 15 and the backrest 16, and an open position in which they allow access to/exit from the passenger compartment 4.

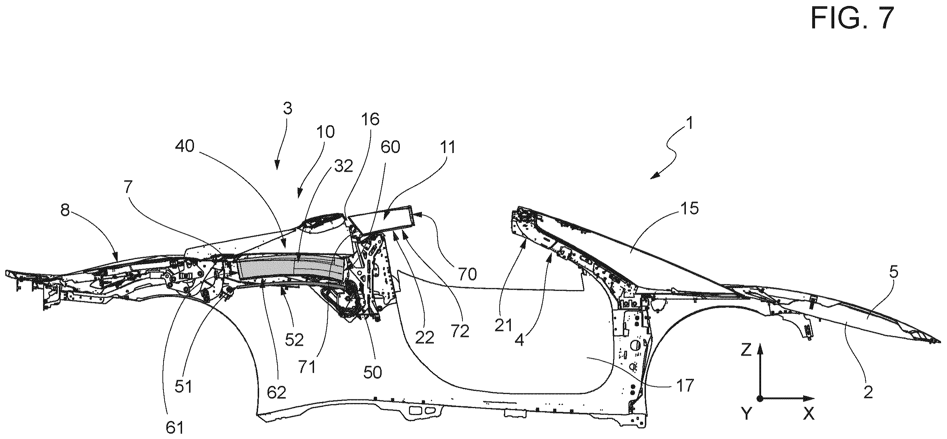

The convertible motor vehicle 1 can selectively assume:
- a "coupé" configuration (Figures 1 to 3), in which the hardtop 3 is arranged so as to cover the passenger compartment 4; and
- a "cabriolet" configuration (Figure 7), in which the passenger compartment 4 is partly open at the top and the hardtop 3 is partly arranged so as to cover the passenger compartment 4 and partly housed within the rear 6.

In more detail, the rear 6 of the motor vehicle 1 defines a load compartment 7, and comprises a hatch 8 which is selectively capable of switching to an open position in which it allows access to the load compartment 7 and a closed position in which it obstructs access to the load compartment 7.

The motor vehicle 1 comprises a kinematic selectively operable from inside the motor vehicle during the travel thereof so as to determine the switch of the hatch 8 from the closed position to the open position, the folding and subsequent movement of the hardtop 3 into the load compartment 7, and the switch of the hatch 8 from the open position to the closed position.

Such kinematic is not shown as not forming part of the present invention.

Advantageously, the hardtop 3 comprises, with reference to said normal travel direction of the motor vehicle 1 and to the coupé configuration of the motor vehicle 1:
- a panel 10 arranged so as to cover, at the top, a portion 21 of said passenger compartment 4 in the first configuration of the motor vehicle 1 and housed in the load compartment 7 in the second configuration of the motor vehicle 1; and
- a panel 11 arranged so as to cover, at the top, a second portion 22 of the passenger compartment 4 both in the first configuration and in the second configuration of the motor vehicle 1;

the panel 10 is arranged in front of the panel 11;
the first panel 10 comprises, in turn, a portion 31 and a pair of portions 32 located in front of the panel 11;
the portions 32 are arranged opposite one another along the axis Y and the portion 31 is interposed between the portions 32 along the axis Y, when the motor vehicle 1 is in said first configuration.

In the following of the present description, the hardtop 3 is described with reference to a plan view orthogonal to the axis Z and to the fully extended configuration of the hardtop 3.

In more detail, the portion 21 is arranged in front of the portion 22 of the passenger compartment.

Even more precisely, the portion 21 is interposed substantially parallel to the axis Y between the windscreen 15 and the portion 22.

The portion 22 is interposed substantially parallel to the axis Y between the portion 21 and the backrest 16.

The portions 32 are arranged laterally to the portions 31, with reference to the axis Y.

In more detail, the portion 31 of the panel 10 comprises, in turn:
- a front end edge 50 and a rear end edge 51 opposite one another along the axis X and elongated along the axis Y; and
- a pair of side end edges 52, elongated along the axis Y and interposed, each, between respective ends opposite one another of the edges 50, 51.

Each portion 32 comprises, in turn:
- a front end edge 60 and a rear end edge 61 opposite one another along the axis X and elongated along the axis Y; and
- a pair of side end edges 62, 63, elongated along the axis Y and interposed, each, between respective ends opposite one another of the edges 60, 61.

The edge 50 of the portion 31 is interposed along the axis Y of the edges 60 of the respective portions 32, and is arranged so as to strike against the respective edges 60.

The edges 50, 60 of the respective portions 31, 32 also delimit, at the front, the panel 10 and are arranged at an upper end of the windscreen 15.

The edges 60, 61 of the panel 10 define, in particular, a continuous extension of respective edges 50, 51 of the panel 10 parallel to the axis Y.

The edge 50 of the portion 31 is interposed along the axis Y between the edges 60 of the respective portions 32, and is arranged so as to strike against the respective edges 60.

The edges 51, 61 of the respective portions 31, 32 also delimit, at the back, the panel 10 and are arranged so as to strike against the panel 11.

The edges 62 of the respective portions 32 are arranged so as to strike against the doors 17 arranged in the respective closed positions.

The edges 63 of the respective portions 32 are interposed along the axis Y between the respective edges 62 and the panel 10, and arranged so as to strike against respective edges 52 of the panel 10.

In particular, the edges 60, 61 of the respective portions 32, 31 of the panel 10 have a first length parallel to the axis Y and the edges 50, 51 of the respective portions 32, 31 of the panel 10 have a second length parallel to the axis Y greater than the first length.

Each panel 11 comprises, in turn:
- a front end edge 70 and a rear end edge 71 opposite one another along the axis X and elongated along the axis Y; and
- a pair of side end edges 72, elongated along the axis Y and interposed, each, between respective ends opposite one another of the edges 70, 71.

The edge 70 of the panel 11 is arranged so as to strike against the edges 51, 61 of respective portions 31, 32 of the panel 10.

The edge 71 of the panel 11 is arranged so as to strike against an upper end edge of the backrest 16.

The edges 72 of the panel 11 are arranged so as to strike against the doors 17 arranged in the respective closed positions.

The edges 72 of the panel 11 are also arranged so as to strike against respective edges 62 of corresponding portions 32 of the panel 10 and define corresponding extensions of said respective edges 62.

In particular, the edge 71 of the panel 11 has a third length parallel to the axis Y greater than the first length of the edges 61 of the respective portions 32 and of the edge 51 of the portion 31 of the panel 10.

The edges 72 of the panel 11 have a fifth length parallel to the axis X and the edges 62 of the portions 32 of the panel 10 have a sixth length parallel to the axis X greater than the fifth length.

The edges 50, 60 of the respective portions 31, 32 of the panel 10 also delimit, at the front, the hardtop 3.

The edges 62, 72 respectively of the portions 32 of the panel 10 and of the panel 11 laterally delimit the hardtop 3.

The edge 71 of the panel 11 also delimits the hardtop 3 at the back.

In the case shown, the portions 31, 32 and the panel 11 are rectangular.

The panels 10, 11 extend symmetrically to the axis X.

The reconfiguration of the motor vehicle 1 is shown hereinbelow starting from the condition shown in Figures 1 to 3, in which the motor vehicle 1 is in the "cabriolet" configuration and the hardtop 3 completely covers the passenger compartment 4.

In this "cabriolet" configuration of the motor vehicle 1, the panels 10, 11 are arranged at the top of the portions 21, 22 of the passenger compartment 4, respectively.

In greater detail, the panel 10 is interposed along the axis X between the windscreen 15 and the panel 11, and the panel 11 is interposed between the panel 10 and the backrest 16 along the axis X itself.

The portion 31 of the panel 10 is interposed along the axis Y between the portions 32 of the same panel 10.

More precisely, the front edge 70 of the panel 11 strikes against the edges 52; 62 of the portions 32, 31 of the panel 10.

The edges 72 of the panel 11 strike against and define the continuous extension of respective edges 62 of the portions 32 of the panel 10.

The edges 63 of the portions 32 of the panel 10 strike parallel to the axis Y against respective edges 52 of the portion 31 of the panel 10.

Even more precisely, the hardtop 3 is delimited:
- at the front by the edge 50 and by the edges 60 of the portions 31, 32 of the panel 10 striking against the upper edge of the windscreen 15;
- at the back by the edge 71 of the panel 11 striking against the upper edge of the backrest 16; and
- laterally by the edges 62 of the portions 32 of the panel 10 and by the edges 72 of the panel 11 arranged so as to strike against the upper edges of respective doors 17 arranged in the respective closed positions.

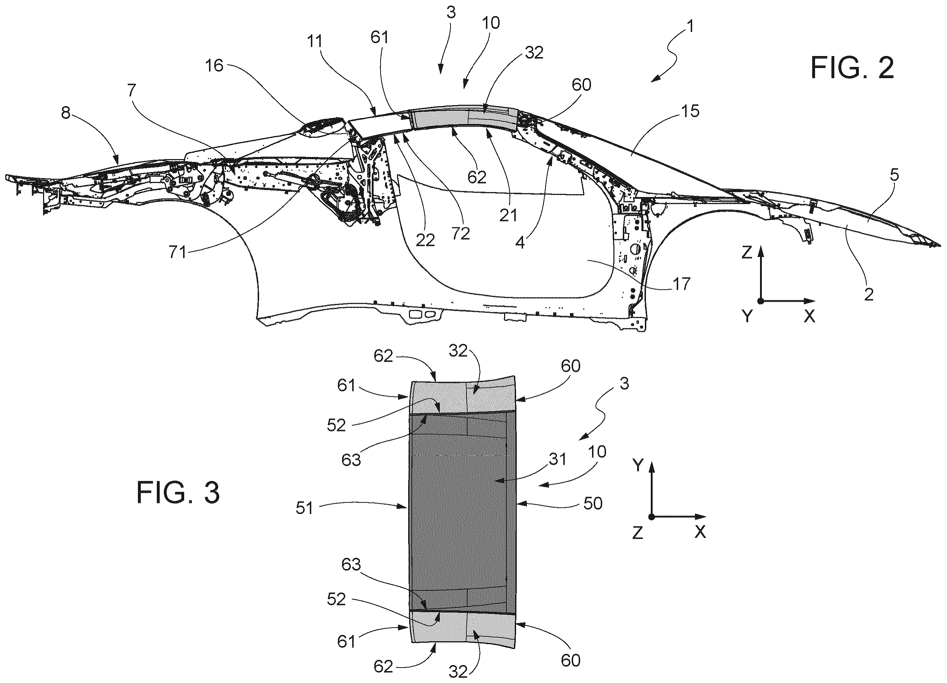

The hatch 8 is arranged so as to cover the load compartment 7, as shown in Figures 1 and 2.

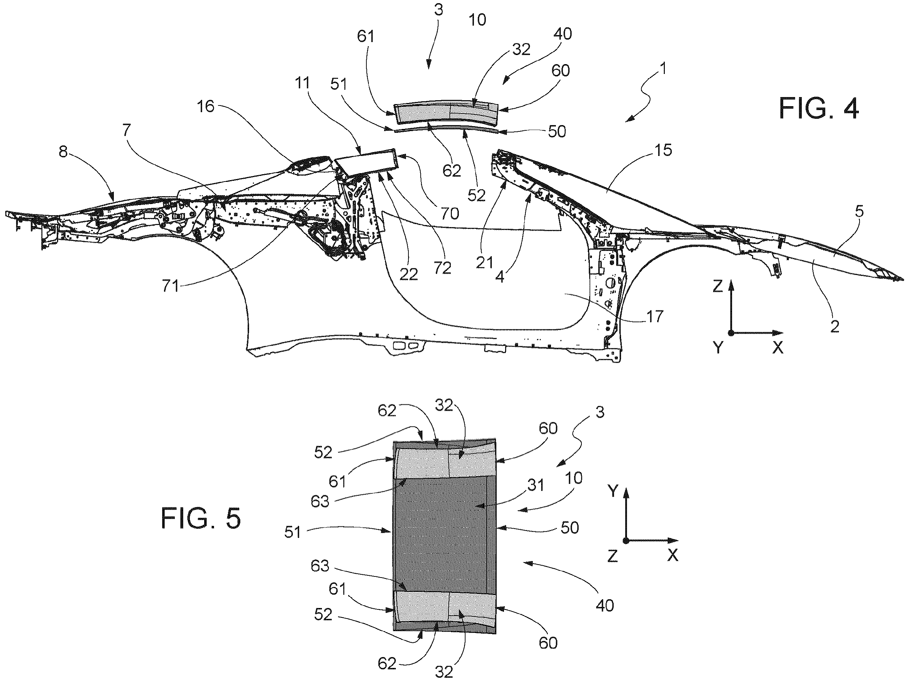

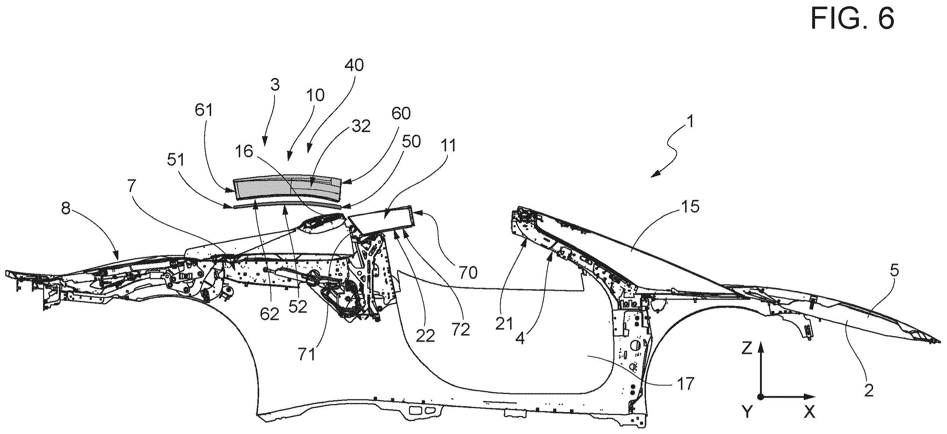

Following the actuation of a control from inside the motor vehicle 1, the kinematic:
- lifts the portion 32 on the portion 31 of the panel 10 so as to form the assembly 40 (Figures 4 and 5), leaving the panel 11 in the same position relative to the body 2;
- arranges the hatch 8 in the lifted position so as to open the load compartment 7 at the top and rotates the assembly parallel to the axis Y and towards the front 5 until it is arranged at the top of the open load compartment 7 (Figure 6);
- lowers the assembly 40 parallel to the axis Z until it is arranged inside the open load compartment 7 (Figure 7); and
- returns the hatch 8 into the lowered position in which it closes the load compartment 7 at the top inside which the panel 10 is housed.

In particular, when forming the assembly 40, the edges 62, 63 of the portions 32 are interposed parallel to the axis Y between the edges 52 of the portion 31 of the panel 10, and the portions 32 are arranged on the panel 10 symmetrically to the axis X.

With reference to the plan view of the motor vehicle 1 orthogonal to the axis Z, the assembly 40 is obtained by translating the portions 11 parallel to the axis Y by the same distance.

The portion 32 is arranged within the load compartment 7 with the portions 32 arranged at the top of the portion 31, and the edges 62, 63 of the portions 32 are interposed parallel to the axis Y between the edges 52 of the portion 31 of the panel 10.

During this movement, the panel 11 remains stationary with respect to the body 2 and in the same position assumed in the first "coupé" configuration of the motor vehicle 1.

The shift of the motor vehicle 1 from the "cabriolet" configuration of Figure 8 to the "coupé" configuration of Figure 1 takes place by carrying out the aforesaid operations in a chronologically opposite sequence. In a nutshell, the hatch 8 is brought into the open position, the assembly 40 is lifted parallel to the axis Z and rotated towards the front 5 parallel to the axis Y.

Next, the assembly 40 is lowered along the axis Z until the edge 50 of the portion 31 is returned against the upper edge of the windscreen 15, and then the portions 32 are returned laterally to the portion 31 with the edges 62 striking against respective upper edges of the doors 17 arranged in the respective closed positions and the edges 63 striking against the edges 52 of the portion 31.

From an examination of the motor vehicle 1 and of the method for the reconfiguration of the motor vehicle 1 according to the invention, the advantages that it allows to be obtained are evident.

In particular, with reference to the said normal travel direction of the motor vehicle 1 and in the plan view:
- the panel 10 is arranged so as to cover, at the top, the portion 21 in the coupé configuration and housed in the load compartment 7 in the cabriolet configuration of the motor vehicle 1; and
- the panel 11 is arranged so as to cover, at the top, the portion 22 of the passenger compartment 4 both in the "cabriolet" configuration and in the "coupé" configuration of the motor vehicle 1.

Thanks to the fact that the panel 10 alone is housed in the load compartment 7 in the "coupé" configuration of the motor vehicle 1, it is possible to contain the encumbrance parallel to the axis Y of the load compartment 7 and, consequently, also the minimum encumbrance parallel to the axis Y of the rear 6 of the corresponding motor vehicle 1.

This effect is particularly exacerbated by the fact that the portions 32 of the panel 10 are folded over the panel 31, so as to further reduce the encumbrance of the assembly 40 parallel to the axis Y.

It is thus possible to reduce the overall aerodynamic drag of the motor vehicle 1 and at the same time reduce the constraints to be respected in the conception of the shape and style of the motor vehicle 1.

Finally, it is clear that modifications and variations may be made to motor vehicle 1 and to the method for the reconfiguration of the motor vehicle 1 realized according to the present invention, which, however, do not go beyond the scope of protection defined by the claims.

## Claims

1. A convertible motor vehicle (1) comprising:
- a body (2);
- a passenger compartment (4);
- a front and a rear (5, 6) located at the front and at the back, respectively, of said passenger compartment (4), with reference to a normal travel direction of said motor vehicle (1); said rear (6) comprising a load compartment (7); and
- a retractable hardtop (3);
said motor vehicle (1) further having:
- a first axis (X), which is oriented from said rear (6) to said front (6) and is parallel to a normal travel direction of said motor vehicle (1); and
- a second axis (Y) arranged, in use, horizontal and orthogonal to said first axis (X);
said motor vehicle (1) being capable of being selectively switched to:
- a first configuration, in which said hardtop (3) is at least partly arranged so as to cover said passenger compartment (4);
- a second configuration, in which said hardtop (3) is at least partly housed within said load compartment (7) of said rear (6) and said passenger compartment (4) is at least partly open;
**characterized in that** said hardtop (3) comprises, with reference to said normal travel direction of said motor vehicle (1) and in a plan view orthogonal to a third axis (Z) transverse to said first and second axes (X, Y) and to said first configuration:
- a first panel (10) arranged so as to cover, at the top, a first portion (21) of said passenger compartment (4) in said first configuration of said motor vehicle (1) and housed in said load compartment (7) in said second configuration of said motor vehicle (1); and
- a second panel (11) arranged so as to cover, at the top, a second portion (22) of said passenger compartment (4) both in said first configuration and in said second configuration of said motor vehicle (1);
said first panel (10) being located in front of said second panel (11);
said first panel (10) comprising, in turn, a third portion (31) and a pair of fourth portions (32) located in front of said second panel (11);
said fourth portions (32) being arranged opposite one another along said second axis (Y) and said third portion (31) being interposed between said fourth portions (32) along said second axis (Y), when said motor vehicle (1) is in said first configuration.

2. The motor vehicle according to claim 1, **characterized in that**, with reference to said first configuration of said motor vehicle (1), said third portion (31) comprises, in turn:
- a first front end edge (50);
- a second rear end edge (51) opposite said first edge (50) along said first axis (X); and
- a pair of third side end edges (52) interposed between said first and second edges (50, 51);
each fourth portion (32) comprising, in turn:
- a relative fourth front end edge (60);
- a relative fifth rear end edge (61) opposite said first edge (50) along said first axis (X); and
- a relative sixth side end edge and seventh side end edge (62, 63) opposite one another along said second axis (Y);
said fourth edges (60) being arranged so as to strike against and defining a continuous extension of said first edge (50);
said fifth edges (61) being arranged so as to strike against and defining a continuous extension of said second edge (51);
said seventh edges (63) of said second panel (11) striking against respective third edges (52) of said first panel (10).

3. The motor vehicle according to claim 2, **characterized in that** said first edge (50) of said third portion (31) has a first length parallel to said second axis (X) and said fifth edges (61) of said fourth portion (32) have a second length, which is smaller than said first length.

4. The motor vehicle according to any one of the preceding claims, **characterized in that** said third portions (31) are at least partly movable on said fourth portion (32), so as to form an assembly (40) to permit, in use, the shift between said first and second configuration of said motor vehicle (1).

5. The motor vehicle according to claim 4, **characterized in that** said sixth and seventh edges (62, 63) of each fourth portion (32) are interposed along said second axis (Y) between said third edges (52) of said third portion (31), when said third portions (31) and said fourth portion (32) form, in use, said assembly (40) and in said plan view.

6. The motor vehicle according to claim 4 or 5, **characterized in that**, with reference to said plan view, said assembly (40) is obtained, in use, as a translation of said third portions (31) of said second panels (11) parallel to said second axis (Y) starting from said first configuration of said motor vehicle (1).

7. The motor vehicle according to any one of the preceding claims, **characterized in that** said second panel (11) comprises, in turn:
- an eighth front end edge (70);
- a ninth rear end edge (71) opposite said eighth edge (70) along said first axis (X); and
- a pair of tenth side end edges (72) interposed between said eighth edge (70) and said ninth edge (71) and opposite one another;
said eighth edge (70) striking against said second edge (51), and said tenth edges (72) striking against and defining a continuous extension of respective third edges (52), with reference to said first configuration of said motor vehicle (1).

8. The motor vehicle according to any one of the claims from 4 to 7, **characterized in that** said first panel (10) can be moved by said second panel (11) from said first configuration to said second configuration of said motor vehicle (1) according to a trajectory comprising, in turn:
- a first translation stroke parallel to said third axis (Z) and along which said assembly (40) is, in use, lifted by said second panel (11);
- a second rotation stroke around said second axis (Y) and along which said second panel (11) is, in use, moved towards said rear (6) of said motor vehicle (1); and
- a third translation stroke parallel to said third axis (Z) and along which said first panel (10) is, in use, placed inside said load compartment (7).

9. A method for the reconfiguration of a motor vehicle (1); said motor vehicle (1) comprising:
- a body (2);
- a passenger compartment (4);
- a front and a rear (5, 6) located at the front and at the back, respectively, relative to said passenger compartment (4);
said motor vehicle (1) further having:
- a first axis (X), which is oriented from said rear (6) to said front (5) and is parallel to a normal travel direction of said motor vehicle (1); and
- a second axis (Y) arranged, in use, horizontal and orthogonal to said first axis (X);
said method comprising the steps of:
i) switching said motor vehicle (1) between a first configuration, in which said hardtop (3) is at least partly arranged so as to cover said passenger compartment (4), and a second configuration, in which said hardtop (3) is at least partly housed inside said rear (6) and said passenger compartment (4) is at least partly open;
**characterized in that** it comprises the steps of:
ii) placing, with reference to said normal travel direction of said motor vehicle (1) and in a plan view orthogonal to a third axis (Z) transverse to said first and second axes (X, Y), a first panel (10) and a second panel (11) of said hardtop (3) so as to cover a first portion (21) and a second portion (22), respectively, of said passenger compartment (4);
iii) housing said first panel (10) inside said load compartment (7) and leaving said second panel (11) to cover said second portion (22) of said passenger compartment (4);
said step ii) comprising the steps of, when said motor vehicle (1) is in said first configuration:
iv) placing said first panel (10) in front of said second panel (11);
v) interposing a third portion (31) of said first panel (10) between fourth portions (32) of said first panel (10) along said second axis (Y); said third portion (31) and said fourth portions (32) being located in front of said second panel (11).

10. The method according to claim 9, **characterized in that** said step i) comprises the step vi) of at least partly moving said third portions (31) on said fourth portion (32), so as to form an assembly (40).

11. The method according to claim 10, **characterized in that** said step vi) comprises the step vii) of forming said assembly (40), with reference to said plan view, as a translation of said third portions (31) of said second panels (11) parallel to said second axis (Y) starting from said first configuration of said motor vehicle (1).

12. The method according to any one of the claims 10 or 11, **characterized in that** step i) further comprises the steps of:
viii) lifting said assembly (40) relative to said body (2) along a first translation stroke parallel to said third axis (Z) and along which said assembly (40) is, in use, lifted by said second panel (11);
ix) rotating said assembly (40) around said second axis (Y) and towards said rear (6) of said motor vehicle (1); and
x) lowering said assembly along a third translation stroke parallel to said third axis (Z) and along which said assembly (40) is, in use, placed inside said load compartment (7).
